# EUROPEAN PATENT SPECIFICATION

(11) **EP 0 889 759 B1**
(45) Date of publication and mention of the grant of the patent: **11.06.2003**
(21) Application number: 97917596.5
(22) Date of filing: 24.03.1997
(51) Int. Cl.: B05D 1/06, C03C 17/32, C03C 17/00

(54) **POLYMER COATING FOR LOW ELECTRICALLY CONDUCTIVE MATERIALS**
POLYMERBESCHICHTUNG FÜR NIEDRIG ELEKTRISCH LEITENDE MATERIALEN
REVETEMENT EN POLYMERE POUR MATERIAUX PEU CONDUCTEURS ELECTRIQUEMENT

(30) Priority: 28.03.1996 EP 96200844
(43) Date of publication of application: 13.01.1999
(73) Proprietor: E.I. DU PONT DE NEMOURS AND COMPANY, Wilmington Delaware 19898 (US)
(72) Inventor: HAUSMANN, Karlheinz, CH-2012 Auvernier (CH); VANLANCKER, Thierry, Princeton, NJ 08542 (US)
(74) Representative: Carpmaels & Ransford
(86) International application number: US9704706
(87) International publication number: WO97035670

(56) References cited:
- EP-A- 0 285 572
- EP-A- 0 667 381
- FR-A- 2 638 663
- US-A- 3 264 272
- US-A- 3 895 126
- US-A- 4 315 573
- US-A- 4 321 337
- US-A- 4 351 931
- US-A- 4 377 603
- US-A- 5 338 578

## Description

The present invention relates to a process for providing a hollow object formed of a low electrically conductive material with a coating of a thermoplastic polymer, and in a preferred embodiment, providing a glass or ceramic container with a coating of an ionomeric polymer.

### Background of the invention

Polymer coatings are provided on objects having low electrical conductivity such as ceramics and glass for a variety of reasons such as for weight savings, shatter protection, aesthetics and touch. In particular, providing shatter protection to glass bottles containing carbonated beverages is of particular importance where the glass bottles are defective or mishandled.

Polymeric coatings can be applied by various means. The objects to be coated can be dipped into a polymeric melt or can be dipped into a fluidised bed of polymer powder particles. It is also known to coat objects using an electrostatic powder spraying process; c.f. DE 2424220, DE 2750370 C2 and DE 2750372 C2.

US 3,895,126 describes a process according to the first four paragraphs of claim 1 in which a bottle is electrostatically sprayed with polymeric particles and cured at 871°C (1600°F) by IR radiation. The subsequent coating is then subjected to rapid cooling to provide acceptable thinness and transparency.

DE 2750370 C2 and 2750372 C2 disclose electrostatic spray coating processes in which the substrate (a glass bottle) is maintained at a temperature below the melting point of the polymer, and the powder is applied by way of silent discharge. Afterwards, the bottle is heated to melt the powder to form a coating, which is subsequently cured. These processes, however, require high investment costs, can lead to corrosion of the equipment as they require continuous discharge, have limitations to the speed at which they can be carried out, require the use of very fine polymer powder which is expensive to produce, often produce non-uniform coatings due to local discharges at the bottle surface, and can be dangerous to carry out due to shattering of the bottles during heating and quenching steps.

These disadvantages are overcome by the current invention.

### Detailed description of the current invention

The present invention provides a process for forming a coating of a thermoplastic polymer on a hollow object formed of low electrically conductive material comprising:
placing a hollow object at a temperature below 100°C into an electrostatic spray booth without pre-heating;
applying thermoplastic polymer having a maximum IR absorption between 1300 and 1900 nm and/or 2800 and 3000 nm electrostatically as a powder to the object while the object is held at a temperature below the melting point of the thermoplastic polymer;
heating the object by IR radiation from an IR source adjusted to the preferential absorption wavelength of the thermoplastic polymer; and
air cooling to room temperature to form the coating.

Advantages of the process include
- the hollow objects, e.g. glass bottles, can be taken directly from the annealing ovens of the glass bottle plants, thereby avoiding the need for large, expensive to preheat the objects prior to coating;
- coating output is increased considerably;
- potentially dangerous electric discharge and vacuum equipment is not needed;
- more uniform coatings can be obtained using less expensive, larger particle size polymer.

As mentioned, suitable thermoplastic polymers to be used in the process according to the invention will have their maximum IR absorption between 1300 and 1900 nm and/or 2800 and 3000 nm. Preferred such polymers are ethylene/acid copolymers and ethylene/acid/acrylate terpolymers and their corresponding ionomers.

Ethylene/acid copolymers and their corresponding ionomers are well known in the art to be copolymers of ethylene with an olefinically unsaturated organic acid such as acrylic or methacrylic acid, the acid comprising about 1 to 50 mole percent of the total polymeric material. The ethylene/acid copolymers and their methods of preparation are well known in the art and are disclosed in, for example US. Pat. Nos. 3,264,272, 3,404,134, 3,355,319 and 4,321,337. The copolymers are termed ionomers when the acid is neutralized in whole or in part, preferably up to 80 % to produce a salt. The cation for said salts may be a metal ion chosen from the first, second or third group of the periodic table of elements, and is preferably an alkali metal such as sodium, potassium or zinc.

Ethylene/acid/acrylate terpolymers and corresponding ionomers are well known in the art to be terpolymers of the aforementioned ethylene and olefinically unsaturated organic acids, together with an alkyl acrylate or methacrylate (e.g. ethylacrylate, n-butyl acrylate, isobutylacrylate or methacrylate). The terpolymers will typically contain between 1 and 40 weight % of alkyl acrylate or methacrylate, 1 and 50 weight % unsaturated organic acid and 50 and 98 weight % ethylene.

Preferred ionomers are copolymers of ethylene and 1 to 50%, more preferably 5 to 25%, by weight acrylic or methacrylic acid neutralized up to about 90%, more preferably from 5 to 60% with an alkali metal ion or a divalent or trivalent metal ion, the melt index of the copolymer, whether neutralized or unneutralized, being about 0.1 to 60, preferably 20 to 40, dg/min. according to ASTM Standard D1238 (condition E).

Suitable acid copolymers and ionomers are available from the DuPont Company under the trade names Nucrel® and Surlyn®, respectively, and are generally described US Patent Nos. 3,264,272 and 4,351,931.

The thermoplastic polymer powders used in the present invention will typically have a particle size up to about 300 microns, and will preferably be from 100 to 250 microns in size. These polymer powders can be made by usual techniques, such as cryogenic grinding.

Equipment for carrying out electrostatic spray coating and its general operation is known.

A general procedure for the process according to the present invention is as follows. A hollow object, e.g. glass bottle, maintained at a temperature below 100 °C, is placed into an electrostatic spray booth without preheating. In the spray booth, a steel rod is placed in contact with the inside of the bottle, thereby establishing an electrostatic potential between powder to be applied to the bottle and bottle. The powder is electrically charges and applied to the bottle in a uniform manner. The bottle is then placed in an IR oven to melt the polymer powder. The IR oven will be configured to permit the optimum wavelength absorbed by the polymer used and may be equipped with ventilation to avoid high temperatures. Subsequently, the bottle is passed to an air cooling step and is cooled to room temperature.

The coating applied to the object will generally have a thickness up to 200 microns, preferably from 80 to 150 microns.

### Examples

Ionomer 1: ethylene methacrylic acid copolymer (EMAA)-Neutralised Na - 10% MAA MFI (190 °C/2.16kg)=10 dg/min.
Ionomer 2: Copolymer EMAA-Neutralised Zn- 10% MAA MFI=30 dg/min.
Acid Copolymer 1: Copolymer EMAA - 15% MAA MFI=60 dg/min.
Conventional oven: gas operated hot air oven, make Glasbeek, having the dimensions : 17x3x50m with a built in conveyor belt forming 4 serpentines.

### Example 1

A lightweight 1 liter glass bottle (weight 415 g), maintained at 23 °C, and into which a steel rod making contact with glass is inserted, is electrostatically sprayed with ionomer 1 powder (particle size up to 225 micron).

The bottle is put, top down and rotating at 15 rpm between four Elstein IR 2000 elements, two being locate on each side of the bottle. The bottom of bottle is heated with a fifth Elstein IR element. The distance between elements and bottle is 6 cm.

The surface temperature of the elements is set at 722 °C, which creates the preferentially absorbed wavelength for this ionomer type.

The powder becomes a complete smooth melt in seven minutes. During cooling in ambient air no significant haze is observed. The coating thickness is between 120 and 160 microns

### Example 2

Example 1 is repeated with acid copolymer 1 powder (particle size: up to 275 micron). Despite a higher MFI, it requires 12 minutes to achieve good coating. Upon cooling, haziness is observed.

### Example 3

Example 1 is repeated with ionomer 2 (particle size 75-275 micron). No haziness after cooling, 6 min 30 seconds until flow-out, low orange peel.

### Control - Conventional oven

A bottle is coated according to Example 3, with the exception that a convention oven is used in place of the IR elements. There is a heating time of 15 minutes to reach 210 °C, flow out takes 10 minutes and a further 10 minutes is required for cooling. The coating thickness is between 200 and 260 microns.

## Claims

1. A process for forming a coating of a thermoplastic polymer on a hollow object formed of low electrically conductive material comprising:
placing a hollow object at a temperature below 100°C into an electrostatic spray booth without pre-heating;
applying thermoplastic polymer having a maximum IR absorption between 1300 and 1900 nm and/or 2800 and 3000 nm electrostatically as a powder to the object while the object is held at a temperature below the melting point of the thermoplastic polymer;
heating the object by IR radiation from an IR source adjusted to the preferential absorption wavelength of the thermoplastic polymer; and
air cooling to room temperature to form the coating.

2. A process according to claim 1 wherein the polymer is a copolymer of ethylene and an olefinically unsaturated organic acid, contains from 1 to 50 weight % of unsaturated monocarboxylic acids and is optionally neutralized up to 80% with at least one metal ion chosen from the 1st, 2nd or 3rd group of the periodic table.

3. A process according to claim 1 wherein the polymer is a copolymer of ethylene and 5 to 25% by weight acrylic or methacrylic acid neutralized from 5 to 60% with an alkali metal ion selected from the group consisting of sodium, potassium or zinc.

4. A process according to claim 2 wherein the copolymer further contains between 1 and 40 weight % of at least one acrylate selected from the group consisting of methyacrylate, iso-butylacrylate, n-butylacrylate and ethylacrylate.

5. A process according to claim 1 wherein the low electrically conductive material is glass.

6. A process according to claim 1 wherein the thermoplastic polymer powder has a particle size of up 300 microns.

7. A process according to claim 1 wherein the coating has a thickness of up to 200 microns.

## Patentansprüche

1. Verfahren zum Bilden eines Überzugs eines thermoplastischen Polymeren auf einem hohlen Gegenstand, gebildet aus niedrig elektrisch leitfähigem Material, umfassend:
Bringen eines hohlen Gegenstandes bei einer Temperatur unterhalb 100°C in eine elektrostatische Sprühzelle ohne Vorerhitzen,
Aufbringen von thermoplastischem Polymer mit einer maximalen IR Absorption zwischen 1300 und 1900 nm und/oder 2800 und 3000 nm elektrostatisch als ein Pulver auf den Gegenstand, während der Gegenstand bei einer Temperatur unterhalb des Schmelzpunktes des thermoplastischen Polymeren gehalten wird,
Erhitzen des Gegenstandes durch IR Strahlung von einer IR Quelle, eingestellt auf die bevorzugte Absorptionswellenlänge des thermoplastischen Polymeren, und Luftkühlen auf Raumtemperatur unter Bilden des Überzugs.

2. Verfahren nach Anspruch 1, wobei das Polymer ein Copolymer aus Ethylen und einer olefinisch ungesättigten organischen Säure ist, 1 bis 50 Gew.% ungesättigte Monocarbonsäuren enthält und wahlfrei auf bis zu 80% mit mindestens einem Metallion, ausgewählt aus der ersten, zweiten oder dritten Gruppe des Periodensystems, neutralisiert wird.

3. Verfahren nach Anspruch 1, wobei das Polymer ein Copolymer aus Ethylen und 5 bis 25 Gew.% Acryl- oder Methacrylsäure, neutralisiert von 5 bis 60% mit einem Alkalimetallion, ausgewählt aus der Gruppe, bestehend aus Natrium, Kalium oder Zink, ist.

4. Verfahren nach Anspruch 2, wobei das Copolymer ferner zwischen 1 und 40 Gew.% mindestens eines Acrylats, ausgewählt aus der Gruppe, bestehend aus Methacrylat, Iso-Butylacrylat, n-Butylacrylat und Ethylacrylat, enthält.

5. Verfahren nach Anspruch 1, wobei das niedrig elektrisch leitfähige Material Glas ist.

6. Verfahren nach Anspruch 1, wobei das thermoplastische Polymerpulver eine Teilchengröße von bis zu 300 Mikrometern hat.

7. Verfahren nach Anspruch 1, wobei der Überzug eine Dicke von bis zu 200 Mikrometern hat.

## Revendications

1. Procédé de formation d'un revêtement de polymère thermoplastique sur un objet creux formé d'une matière peu conductrice de l'électricité, comprenant :
le fait de placer un objet creux à une température inférieure à 100°C dans une cabine de pulvérisation électrostatique sans préchauffage ;
le fait d'appliquer un polymère thermoplastique ayant un maximum d'absorption IR compris entre 1300 et 1900 nm et/ou entre 2800 et 3000 nm électrostatiquement sous forme de poudre, tandis que l'objet est maintenu à une température inférieure au point de fusion du polymère thermoplastique ;
le fait de chauffer l'objet par le rayonnement d'une source d'IR ajustée à la longueur d'onde préférentielle du polymère thermoplastique ; et
le fait de refroidir à l'air à la température ambiante pour former le revêtement.

2. Procédé selon la revendication 1, dans lequel le polymère est un copolymère de l'éthylène et d'un acide organique oléfiniquement insaturé, contient de 1 à 50% en poids d'acides monocarboxyliques insaturés et est neutralisé si on le désire jusqu'à 80% par au moins un ion de métal choisi dans le ler, le 2ème ou le 3ème groupe de la classification périodique.

3. Procédé selon la revendication 2, dans lequel le polymère est un copolymère de l'éthylène et de 5 à 25% en poids d'acide acrylique ou méthacrylique neutralisé à 5 à 60% avec un ion de métal alcalin choisi dans le groupe constitué du sodium, du potassium ou du zinc.

4. Procédé selon la revendication 2, dans lequel le copolymère contient en outre entre 1 et 40% en poids d'au moins un acrylate choisi dans le groupe constitué de l'acrylate de méthyle, de l'acrylate d'isobutyle, de l'acrylate de n-butyle et de l'acrylate d'éthyle.

5. Procédé selon la revendication 1, dans lequel la matière peu conductrice de l'électricité est le verre.

6. Procédé selon la revendication 1, dans lequel la poudre de polymère thermoplastique a une taille de particules allant jusqu'à 300 microns.

7. Procédé selon la revendication 1, dans lequel le revêtement a une épaisseur allant jusqu'à 200 microns.
